## Europäisches Patentamt
## European Patent Office
## Office européen des brevets

(19)

(11) Veröffentlichungsnummer: **0 079 436**
**B1**

(12)

# EUROPÄISCHE PATENTSCHRIFT

(45) Veröffentlichungstag der Patentschrift:
**22.07.87**

(51) Int. Cl.⁴: **G 01 D 15/28**

(21) Anmeldenummer: **82107991.0**

(22) Anmeldetag: **31.08.82**

(54) **Halterung für die Achse einer Materialrolle.**

(30) Priorität: **16.11.81 DE 3145405**

(43) Veröffentlichungstag der Anmeldung:
**25.05.83 Patentblatt 83/21**

(45) Bekanntmachung des Hinweises auf die Patenterteilung:
**22.07.87 Patentblatt 87/30**

(84) Benannte Vertragsstaaten:
**CH FR GB LI**

(56) Entgegenhaltungen:
**EP-A-0 002 255**
**DE-B-1 186 226**
**US-A-3 082 970**
**US-A-4 167 253**

(73) Patentinhaber: **VDO Adolf Schindling AG,
Gräfstrasse 103, D-6000 Frankfurt/Main (DE)**

(72) Erfinder: **Thönebe, Werner, Langefeldstrasse 20,
D-3013 Barsinghausen 12 (DE)**

(74) Vertreter: **Könekamp, Herbert, Dipl.- Ing., Sodener
Strasse 9, D-6231 Schwalbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

### Beschreibung

Die Erfindung bezieht sich auf eine Halterung für die Achse einer Materialrolle, bestehend aus zwei Seitenplatinen mit jeweils einem zu einer Seite hin offenen Schlitz zum Einschieben und Aufnehmen jeweils eines Endes der Achse der Materialrolle. Bei einer solchen Halterung kann es sich zum Beispiel um die Kassette für die Aufwickelrolle des Diagrammstreifens eines Registriergerätes handeln.

Durch die kompakte Bauweise von Registriergeräten, wodurch nahezu die gesamte Gehäusebreite von dem Diagrammstreifen abgedeckt wird, ist es nicht möglich, die Aufwickelrolle ohne Hilfseinrichtung und nur mit den Händen aus der Halterung des Registriergerätes zu entnehmen. In den meisten Fällen muß zu diesem Zweck der ganze Schreibereinsatz oder bestenfalls die Schreiberkassette aus dem Gehäuse des Registriergerätes entnommen werden. Dadurch wird jedoch die laufende Meßwertaufzeichnung unterbrochen, was nicht in jedem Fall erwünscht ist.

Auch bei anderen Geräten, zum Beispiel bei Kopiergeräten, besteht vielfach des Erfordernis, eine Materialrolle in eine Halterung einzuführen und dort zu verriegeln. Meist verlaufen hierzu die Schlitze senkrecht oder schräg von obenher in Seitenplatinen, so daß die Materialrolle aufgrund ihres Gewichtes in eine Endstellung am Ende der Schlitze gelangt. Das Einschieben einer Materialrolle ist bei einer solchen Halterung zwar meist relativ einfach, nicht aber die Entnahme, da aus Gründen der Kompaktheit der Platz im Bereich der Materialrolle sehr eng ist, so daß man die Materialrolle mit beträchtlichem Geschick, oftmals sogar nur mit einem speziellen Werkzeug erreichen kann.

Der Erfindung liegt die Aufgabe zugrunde, eine Halterung der eingangs genannten Art zu entwickeln, bei der auch bei sehr ungünstigen Platzverhältnissen das Einfügen und vor allem die Entnahme einer Materialrolle ohne Werkzeug einfach zu bewerkstelligen ist.

Diese Aufgabe wird erfindungsgemäß durch die im Anspruch 1 angegebenen Maßnahmen gelöst.

Durch diese erfindungsgemäße Gestaltung braucht die Materialrolle nicht mehr aus ihrer Betriebsstellung von Hand nach vorn oder oben aus der Halterung gezogen zu werden, vielmehr gelangt sie durch die Schwenkbewegung beider Verriegelungshebel in eine Entnahmestellung, in der sie bequem gegriffen werden kann. Beim Einlegen der Materialrolle genügt es, diese bis in Entnahmestellung zu schieben, so daß sie anschließend mit Hilfe der Verriegelungshebel weiter in ihre Endstellung gebracht werden kann. Diese Verschiebemöglichkeit der Materialrolle mittels der Verriegelungshebel ist vor allem wichtig, wenn die Schlitze waagerecht in der Halterung verlaufen.

Die Verriegelungshebel lassen sich mit nur einer Hand gleichzeitig und gleichförmig bedienen, wenn diese wie im Anspruch 2 angegeben durch einen Querstab miteinander verbunden sind. Durch diesen Querstab ist auch ein Verkanten der Achse der Materialrolle in den beiden Schlitzen der Seitenplatinen ausgeschlossen.

Durch die im Anspruch 3 angegebene vorteilhafte Ausgestaltung der Erfindung wird erreicht, daß sich die Hebel infolge ihres Eigengewichtes und des Gewichtes des Querstabes von selbst stets in Verriegelungsstellung bewegen und dabei die Achse der Materialrolle in die Halterung hineinziehen. Dadurch erfolgt die Verriegelung der Achse in Endstellung stets zwangsläufig, sobald man den Querstab losgelassen hat. Das Verriegeln kann deshalb nicht vergessen werden.

Von Vorteil ist es auch, wenn die Schlitze in den Seitenplatinen geringfügig nach vorn geneigt verlaufen, weil dann die Materialrolle nach dem Entriegeln von selbst nach vorn aus der Halterung rutscht.

Um zu verhindern, daß eine Materialrolle ganz aus der Halterung herausfallen kann, ist es zweckmäßig, in den Schlitzen eine Stufe vorzusehen, wie das im Anspruch 5 angegeben ist.

Die Erfindung läßt zahlreiche Ausführungsmöglichkeiten zu. Eine davon ist in der Zeichnung dargestellt und wird nachfolgend beschrieben. Ea zeigen

Figur 1 den die Erfindung betreffenden Bereich eines Registriergerätes mit der erfindungsgemäßen Halterung,

Figur 2 eine Vorderansicht auf eine Seite des Registriergerätes gemäß Figur 1.

Das dargestellte Registriergerät hat einen Vorratsbehälter 1, in den eine nicht dargestellte Vorratsrolle mit dem Aufzeichnungsträger einlegbar ist. Aus dem Vorratsbehälter 1 wird der Aufzeichnungsträger über eine Transportrolle 2 zu einer Aufwickelrolle 3 geführt. Die Transportrolle 2 hat Stifte, welche in einer Randperforierung des Aufzeichnungsträgers zu greifen vermögen. Durch einen gleichmäßigen Antrieb der Transportrolle 2 wird für einen gleichmäßigen Vorschub des Aufzeichnungsträgers aus dem Vorratsbehälter 1 heraus gesorgt.

Die Aufwickelrolle 3 ist so angetrieben, daß der von der Transportrolle 2 geförderte Aufzeichnungsträger aufgewickelt wird, nicht aber die Aufwickelrolle 3 die Vorschubgeschwindigkeit bestimmen kann. Die Aufwickelrolle 3 ist mit den Enden einer Achse 4 in jeweils einem Schlitz 5 zweier Seitenplatinen 6 gelagert, von denen nur die eine Seitenplatine 6 zu erkennen ist. Die Schlitze 6 steigen nach hintenzu geringfügig an und haben etwa in halber Tiefe eine Stufe 7.

An jeder Seitenplatine 6 ist oberhalb der in Endstellung befindlichen Achse 4 jeweils ein Verriegelungshebel 8 um einen Drehpunkt 9 schwenkbar gelagert. Jeder Verriegelungshebel 8 hat eine maulartige Öffnung 10, welche genau wie die Schlitze 5 ein Ende der Achse 4 aufzunehmen vermag. Die Öffnungen 10 sind so gestaltet, daß durch Schwenkung der Verriegelungshebel 8 im Uhrzeigersinn um die Drehpunkte 9 die Achse 4 aus ihrer dargestellten Endstellung in eine gestrichelt dargestellte Entnahmeposition bis gegen die Stufe 7 gefördert wird.

Um beide Verriegelungshebel 8 synchron bewegen zu können, sind die Verriegelungshebel 8 durch einen Querstab 11 miteinander verbunden. Dieser Querstab 11 ist so schwer bemessen, daß die Verriegelungshebel 8 sich selbsttätig in die dargestellte untere Verriegelungsstellung bewegen.

Die beschriebene Halterung arbeitet wie folgt. In der dargestellten Position ist die Achse 4 durch die Verriegelungshebel 8 am Ende der Schlitze 5 festgehalten. Werden die Verriegelungshebel 8 durch Hochziehen des Querstabes 11 im Uhrzeigersinn verschwenkt, dann schieben die maulartigen Öffnungen 10 die Achse 4 in den Schlitzen 5 in der Zeichnung gesehen nach links, bis daß sie gegen die Stufe 7 anliegt. Die maulartigen Öffnungen 10 fluchten in dieser Stellung jeweils mit dem Schlitzen 5, so daß die Aufwickelrolle mit der Achse 4 anschließend aus den Schlitzen 5 nach vorn hin herausgezogen werden kann.

Soll eine neue Aufwickelrolle eingelegt werden, dann ist der Querstab zunächst in die in Figur 1 gestrichelt dargestellte Position nach obenhin anzuheben. Anschließend ist die Aufwickelrolle 3 mit der Achse 4 soweit in die Schlitze 5 zu schieben, bis daß die Achse 4 hinter der Stufe 7 liegt. Werden nun die Verriegelungshebel 8 durch Absenken des Querstabes 11 entgegen dem Uhrzeigersinn verschwenkt, dann ziehen die maulartigen Öffnungen 10 die Achse 4 in die Schlitze 5 hinein, bis sie am Ende der Schlitze 5 in eine Endstellung gelangt und dort verriegelt ist.

**Patentansprüche**

1. Halterung für die Achse einer Materialrolle, bestehend aus zwei Seitenplatinen mit jeweils einem zu einer Seite hin offenen Schlitz zum Einschieben und Aufnehmen jeweils eines Endes der Achse der Materialrolle, gekennzeichnet durch jeweils einen schwenkbar an jeder Seitenplatine (6) angeordneten Verriegelungshebel (8), welcher eine das jeweilige Achsende umgreifende maulartige Öffnung (10) hat, die in Bezug auf den Drehpunkt (9) des Verriegelungshebels (8) so gestaltet ist, daß die Achse (4) durch Schwenken der Verriegelungshebel (8) in den Schlitzen (5) von einer vorderen in eine hintere Position bewegbar und dort verriegelbar ist.

2. Halterung nach Anspruch 1, dadurch gekennzeichnet, daß die Verriegelungshebel (8) durch einen parallel zur Achse (4) verlaufenden Querstab (11) an der Frontseite der Halterung miteinander verbunden sind.

3. Halterung nach Anspruch 1 oder einem der folgenden, dadurch gekennzeichnet, daß die Verriegelungshebel (8) oberhalb der Schlitze (5) gelagert sind und die maulartige Öffnung (10) in einer oberen Stellung der Verriegelungshebel (8) mit dem jeweiligen Schlitz (5) in den jeweiligen Seitenplatinen (6) fluchtet.

4. Halterung nach Anspruch 1 oder einem der folgenden, dadurch gekennzeichnet, daß die Schlitze (5) geringfügig nach vorn geneigt verlaufen.

5. Halterung nach Anspruch 1 oder einem der folgenden, dadurch gekennzeichnet, daß die Schlitze (5) eine Stufe (7) an einer solchen Stelle aufweisen, an der die maulartige Öffnung (10) jedes Verriegelungshebels (8) über das jeweilige Ende der Achse (4) zu greifen vermag.

**Claims**

1. Holding device for the spindle of a roll of material, comprising two side plates each having a slot open to one side for the insertion and accommodation of one end each of the material roll spindle, characterised by locking levers (8) pivotably arranged one at each side plate (6), each such lever having a mouth-like opening (10) which engages about the respective spindle end and which is so formed in relation to the pivot point (9) of the locking lever (8) that by moving the locking levers (8) pivotably the spindle (4) is movable in the slots (5) from a forward to a rear position and is lockable therein.

2. Holding device according to claim 1, characterised in that the locking levers (8) are connected to one another at the front side of the holding device by a transverse rod (11) extending parallel to the spindle (4).

3. Holding device according to claim 1 or one of the following claims, characterised in that the locking levers (8) are mounted above the slots (5), and in an upper position of the locking levers (8) the mouth-like opening (10) is in alignment with the respective slot (5) in the respective side plates (6).

4. Holding device according to claim 1 or one of the following claims, characterised in that the slots (5) follow a forwardly slightly inclined course.

5. Holding device according to claim 1 or one of the following claims, characterised in that the slots (5) have a step (7) at a place where the mouth-like opening (10) of each locking lever (8) can engage over the respective end of the spindle (4).

## Revendications

1. Support pour l'axe d'un rouleau de matière, constitué par deux platines latérales présentant, à chaque fois, une fente ouverte d'un côté pour permettre l'insertion et la réception d'une extrémité respective de l'axe du rouleau de matière, caractérisé par un levier respectif de verrouillage (8), qui est monté pivotant sur chaque platine latérale (6) et comporte une ouverture (10) du type gueule entourant l'extrémité considérée de l'axe et configurée, par rapport au point de rotation (9) du levier de verrouillage (8), de telle sorte que, par un pivotement des leviers de verrouillage (8), l'axe (4) puisse être déplacé dans les fente (5) d'une position antérieure à une position postérieure, et puisse y être verrouillé.

2. Support selon la revendication 1, caractérisé par le fait que les leviers de verrouillage (8) sont reliés l'un à l'autre, à la face frontale du support, par l'intermédiaire d'une barrette transversale (11) s'étendant parallèlement à l'axe (4).

. Support selon la revendication 1 ou l'une des suivantes, caractérisé par le fait que les leviers de verrouillage (8) sont montés au-dessus des fentes (5) et, dans une position supérieure des leviers de verrouillage (8), l'ouverture (10) du type gueule coïncide avec la fente respective (5) pratiquée dans les platines latérales considérées (6).

4. Support selon la revendication 1 ou l'une des suivantes, caractérisé par le fait que les fentes (5) s'étendent avec légère inclinaison vers l'avant.

5. Support selon la revendication 1 ou l'une des suivantes, caractérisé par le fait que les fentes (5) comportent un gradin (7) à un emplacement auquel l'ouverture (10) du type gueule de chaque levier de verrouillage (8) est en mesure d'emprisonner par-dessus l'extrémité considérée de l'axe (4)